# FASCICULE DE BREVET EUROPEEN

(11) **EP 0 422 988 B1**
(45) Date de publication et mention de la délivrance du brevet: **11.01.1995**
(21) Numéro de dépôt: 90402732.3
(22) Date de dépôt: 03.10.1990
(51) Int. Cl.: G01N 1/00, G01N 30/20, G01N 1/10

(54) **Dispositif et procédé pour transférer un échantillon de fluide entre deux chambres et application notamment à la chromatographie gazeuse**
Verfahren und Vorrichtung zum Transport von Flüssigkeitsproben zwischen zwei Kammern und ihre Anwendung in der Gaschromatographie
Method and device for transferring a fluid sample between two chambers, and their application to gas chromatography

(30) Priorité: 10.10.1989 FR 8913262
(43) Date de publication de la demande: 17.04.1991
(73) Titulaire: INSTITUT FRANCAIS DU PETROLE, 92502 Rueil-Malmaison (FR)
(72) Inventeur: Richecoeur, Alain, F-92500 Rueil Malmaison (FR); Pucci, Annick, F-78490 Croissy sur Seine (FR); Larue, Joseph, F-78240 Chambourcy (FR); Sanchez, José, F-95270 Saint Martin du Tertre (FR)

(56) Documents cités:
- EP-A- 0 028 408
- DE-A- 2 600 622
- FR-A- 1 439 078
- FR-A- 2 266 886
- GB-A- 1 286 341
- US-A- 3 401 565
- US-A- 3 483 754

## Description

La présente invention concerne un procédé et un dispositif pour transférer un échantillon fluide d'une première chambre à une deuxième chambre. L'invention s'applique notamment à la prise d'un échantillon micro-volumique en équilibre thermodynamique dans une chambre et au transfert de cet échantillon dans une conduite.

Plus particulièrement, l'invention s'applique à l'échantillonnage d'un fluide circulant dans une conduite à très basse température (- 20°C à - 100°C) et haute pression (100 bar environ), et au transfert de l'échantillon vers une ligne à haute température (250°C par exemple) et faible pression, telle qu'une ligne de chromatographie en phase gazeuse.

L'invention permet de déterminer la composition d'un fluide en circulation dans un appareillage sans modifier sensiblement le volume du fluide échantillonné.

En effet, la difficulté de l'échantillonnage en ligne d'un liquide en équilibre avec une phase vapeur, et donc à son point de bulle, réside dans le fait que l'échantillon doit être piégé dans les strictes conditions de l'équilibre thermodynamique, puis entièrement vaporisé par chauffage et/ou détente dans le gaz vecteur du chromatographe.

Le document DE-A-2600622 divulgue un procédé et un dispositif pour transférer un échantillon fluide d'une première chambre à une deuxième chambre séparée de la première chambre, selon le préambule de la revendication 1.

Conformément à la présente invention la première tige peut comporter une extrémité ayant une cavité, la cavité étant alors ouverte, l'extrémité étant adaptée à coopérer avec une extrémité de la deuxième tige pour former ladite cavité, la première et la deuxième tiges comportant chacune une paroi cylindrique extérieure ayant les mêmes dimensions, la paroi cylindrique de la première tige et la paroi cylindrique de la deuxième tige étant adaptées à coopérer avec un élément central d'étanchéité circonférentiel assurant l'étanchéité entre la première et la deuxième chambres, au niveau desdites tiges.

La première et la deuxième tiges pourront traverser de part en part respectivement la première et la deuxième chambres et coopérer avec un premier ou un deuxième élément latéral d'étanchéité respectivement, assurant, au niveau de la première ou la deuxième des tiges respectivement, le confinement de la première ou la deuxième chambre respectivement.

La deuxième chambre pourra communiquer avec un dispositif d'analyse.

La deuxième chambre pourra être située sur une ligne d'échantillonnage dans laquelle circule un fluide vecteur.

Lorsque l'une desdites chambres doit être réchauffée par rapport à une autre desdites chambres, ladite chambre pourra être située sur une ligne conductrice de l'électricité et être parcourue par un fluide, le dispositif pourra comporter des moyens électriques adaptés à faire circuler un courant dans ladite ligne pour produire, par effet Joule, un échauffement de ladite ligne et l'élément central d'étanchéité et l'une desdites tiges située dans ladite chambre seront électriquement résistants.

Lorsque l'une au moins desdites chambres doit être refroidie ou réchauffée et maintenue à une température déterminée, cette chambre pourra être située sur une ligne dans laquelle circule un fluide, la ligne pourra comporter un enroulement autour de cette chambre de manière à ce que la circulation de fluide refroidisse ou réchauffe respectivement ladite chambre.

Ladite ligne pourra comporter au moins en dehors de l'une desdites chambres des moyens d'échange thermique extérieurs à ladite ligne et adaptés au transfert d'énergie thermique entre ladite ligne et un milieu extérieur à ladite ligne.

Ladite ligne pourra comporter un enroulement autour de la chambre à réchauffer ou à refroidir, et les moyens d'échange thermique pourront être disposés sur ladite ligne, en dehors dudit enroulement.

L'un au moins desdits éléments d'étanchéité pourra comporter un matériau polymérique du type polyimide.

La première et la deuxième tiges pourront traverser de part en part respectivement la première et la deuxième chambres, et coopérer avec un premier et un deuxième éléments latéraux d'étanchéité respectivement assurant, au niveau de la première et de la deuxième tiges respectivement, le confinement de la première et de la deuxième chambres respectivement, le dispositif comportant un axe solidaire desdites première et deuxième chambres, de l'élément central d'étanchéité, des premier et deuxième éléments latéraux d'étanchéité, une première et une deuxième butées solidaires de la première et la deuxième tiges, ledit axe se déplaçant relativement auxdites tiges entre lesdites butées de manière à placer les extrémités de la première et la deuxième tiges d'une part dans la première chambre lorsque l'axe est en contact avec la première butée et d'autre part dans la deuxième chambre lorsque l'axe est en contact avec la deuxième butée, et les moyens d'ouverture de ladite cavité pourront comporter des éléments élastiques permettant d'une part le déplacement des butées sous l'action d'un effort déterminé produit par ledit axe, de manière à produire l'ouverture de ladite cavité et permettant d'autre part le replacement des butées lorsque ledit effort déterminé est supprimé, de manière à produire une fermeture de ladite cavité, les extrémités des première et deuxièmes tiges étant en contact.

La première ou la deuxième tiges pourra être en céramique.

L'invention propose aussi un procédé pour transférer un échantillon de fluide d'une première chambre à une deuxième chambre séparée de la première chambre un élément central d'étanchéité assurant l'étanchéité entre les deux chambres. Ce procédé est notamment caractérisé en ce que l'on effectue les étapes successives suivantes :
- on ouvre une cavité définie par les extrémités de deux tiges coaxiales cylindriques, ayant des parois cylindriques de même dimensions,
- on ferme ladite cavité dans ladite première chambre, on transfère ladite cavité de ladite première chambre a ladite deuxième chambre par une translation axiale desdites tiges relativement auxdites chambres,
- on ouvre ladite cavité dans ladite deuxième chambre, et on chauffe l'une au moins desdites chambres par effet Joule en plaçant ladite chambre sur une ligne conductrice (70a, 70b) de l'électricité qui est parcourue par un fluide, des moyens électriques étant adaptés à faire circuler un courant dans ladite ligne (70a, 70b) pour produire un échauffement de cette ligne, l'élément central d'étanchéité (3) et l'une des tiges située dans ladite chambre étant des isolants électriques.

Pour ouvrir ladite cavité sous l'action d'un effort déterminé contre l'action de moyens de rappel, lorsque l'on déplace la première et la deuxième chambre entre deux positions définies par le contact des chambres avec une première et une deuxième butées respectivement solidaires de la deuxième tige et de la première tige, lesdites tiges étant en contact l'une de l'autre, on pourra produire le déplacement de l'une ou de l'autre des butées, lesdites chambres étant en contact avec l'une ou l'autre des butées de manière à séparer les extrémités des tiges et ainsi ouvrir ladite cavité.

Le dispositif ou le procédé peuvent s'appliquer à la prise d'échantillon dans une première chambre ayant une température inférieure à moins 50°C et de préférence inférieure à moins 100°C.

Le dispositif ou le procédé peuvent s'utiliser à la mesure par chromatographie gazeuse.

L'invention sera bien comprise et ses avantages apparaîtront clairement à la lecture de la description suivante d'un exemple de réalisation illustré par les figures annexées parmi lesquelles :
- la figure 1 représente le dispositif selon l'invention,
- la figure 2 schématise l'appareillage permettant des mesures thermodynamiques d'un mélange polyphasique de fluides, et
- la figure 3 est une vue de détail, au niveau de la deuxième chambre, d'une ligne de chromatographie équipant le dispositif selon l'invention.

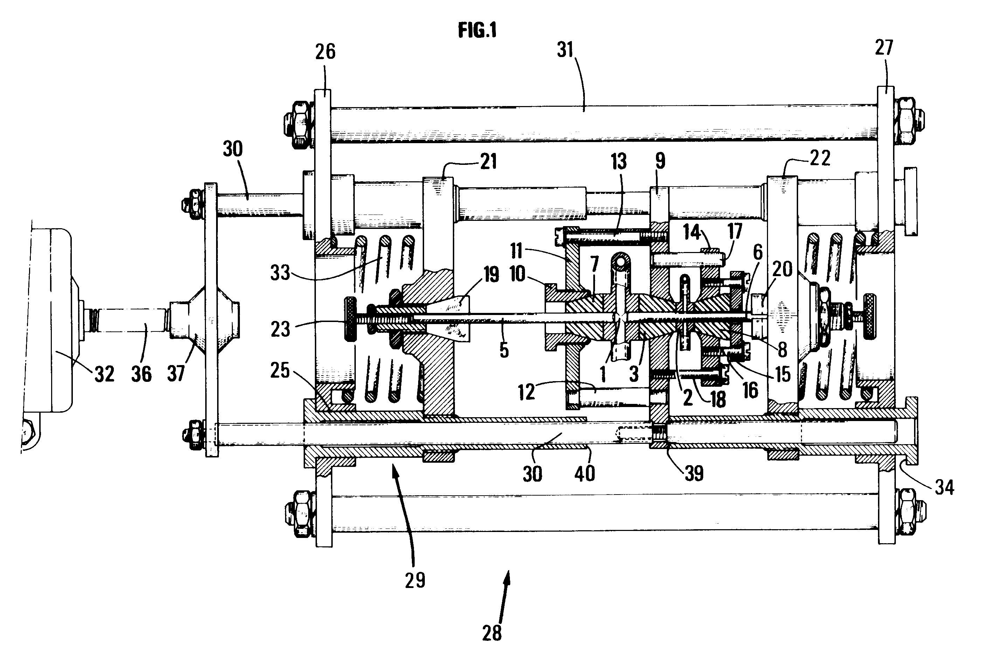

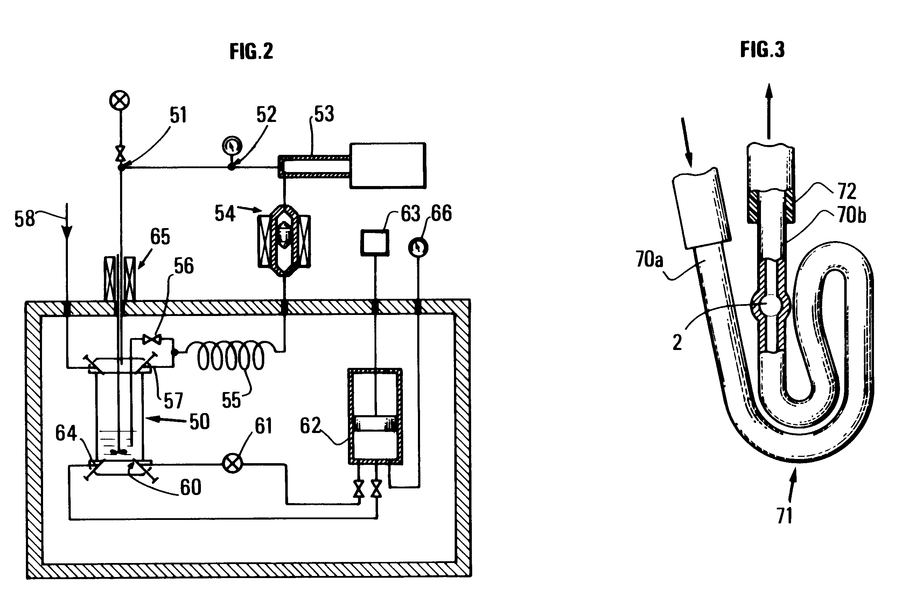

La figure 1 représente le dispositif selon l'invention qui permet de transférer d'une première chambre 1, en communication avec un appareillage d'expérimentation représenté à la figure 2, un échantillon de fluide vers une deuxième chambre 2 en communication avec un chromatographe pour l'analyse en phase gazeuse.

La première chambre 1 est séparée de la deuxième chambre 2 par un élément central d'étanchéité 3 qui comporte un passage axial permettant l'étanchéité et la traversée d'une première tige 5 et d'une deuxième tige 6 ayant le même axe et adaptées à se déplacer suivant cet axe. La première tige 5 qui traverse la première chambre 1 de part en part coopère avec le premier élément latéral d'étanchéité 7 pour assurer le confinement de la première chambre 1 du côté de la première chambre 1 opposée à la deuxième chambre 2.

La deuxième tige 6, qui traverse la deuxième chambre 2 de part en part, coopère avec le deuxième élément latéral d'étanchéité 8 pour assurer le confinement de la deuxième chambre 2 du côté de la deuxième chambre 2 opposée à la première chambre 1.

Selon les positions de la première et deuxième tiges relativement auxdites chambres, l'élément central 3 d'étanchéité coopère successivement avec la première tige 5 et la deuxième tige 6 pour assurer l'étanchéité entre la première chambre 1 et la deuxième chambre 2.

La première tige 5 comporte à son extrémité une zone en forme de dépression qui peut être fermée avec l'extrémité de la deuxième tige 6 lorsque cette dernière est en contact avec l'extrémité de la première tige 5.

Cette dépression permet la prise d'un échantillon de fluide dans la première chambre. Le volume de la cavité formée par la dépression et obturée par l'extrémité de la deuxième tige est de 2 microlitres.

Les deux chambres 1 et 2, les éléments d'étanchéité 3, 7 et 8, sont montés sur un châssis 9 qui se déplace en translation relativement aux tiges 5 et 6.

L'élément central d'étanchéité 3 et le premier élément latéral d'étanchéité 7, qui sont tous les deux coniques, sont montés de telle manière que les parties évasées des cônes sont en contact avec la paroi de la première chambre 1 et les parties les plus étroites de ces cônes dirigés vers l'extérieur des parois de la première chambre 1. L'élément central d'étanchéité 3 est encastré dans le châssis 9, tandis que le premier élément latéral d'étanchéité est encastré dans une douille conique 10 filetée extérieurement et qui coopère avec une plaque 11 solidaire du châssis 9 pour assurer le serrage à la fois de l'élément central 3 d'étanchéité et du premier élément latéral d'étanchéité 7 sur les parois extérieures de la première chambre 1 et sur les parois extérieures de la première 5 et de la deuxième 6 tiges, au niveau de l'élément central d'étanchéité 3 et du premier élément latéral d'étanchéité 7. La plaque 11 est positionnée relativement au châssis 9 au moyen de deux pions 12 et solidarisée au châssis 9 au moyen d'un ensemble de vis et d'entretoises 13.

Le deuxième élément latéral d'étanchéité 8, qui est conique, est encastré dans un siège conique 14 dans lequel cet élément 8 est comprimé sur sa partie évasée par une plaque presse-étoupe 15 vissée au siège 14 par des vis 16, de manière à réaliser l'étanchéité entre la deuxième tige 6 et le deuxième élément d'étanchéité 8.

La partie étroite de l'élément central d'étanchéité 3 et la partie étroite de l'élément latéral d'étanchéité 8 sont positionnées l'une par rapport à l'autre au moyen des pions 17 et pressées contre les parois extérieures de la deuxième chambre 2 au moyen de vis 18.

Les éléments d'étanchéité 3, 7, 8 sont réalisés avec un polymère du type polyimide, tel que le Vespel ou du Kinel qui sont respectivement des marques déposées par Du Pont et Rhône Poulenc.

Les tiges cylindriques 5 et 6 qui sont coaxiales et de section circulaire sont maintenues identiquement chacune par une pince-support respectivement 19 et 20, comportant chacune une partie extérieure conique et élastique, une partie extérieure filetée et une partie intérieure taraudée.

La partie conique des pinces-supports 19 et 20 sont chacune encastrées dans un évidement conique d'une platine 21 ou 22 respectivement.

Un écrou coopérant avec la platine 21 ou 22, et la partie extérieure filetée de la pince-support 19 ou 20 assure le serrage des tiges 5 et 6 dans leur pince-support respective.

La position axiale des tiges 5 ou 6 relativement à leur pince-support 19 ou 20 est réglée par une vis 23 coopérant avec la partie intérieure taraudée de la pince-support qui assure une butée en bout de la tige, la vis étant immobilisée sur la pince-support par un contre-écrou.

Les platines 21 et 22 sont guidées en translation d'une part par des axes 30, et d'autre part par des alésages 25 réalisés dans des flasques 26 et 27 d'un bâti référencé 28 dans son ensemble qui coopère avec la surface extérieure de quatre chapes 29.

Les flasques 26 et 27 du bâti sont rigidifiés par les raidisseurs 31 et fixés à une semelle (non représentée) parallèle au plan de la figure, sur laquelle est aussi fixé un moteur 32.

Les platines 21 et 22 sont chacune rapprochées l'une de l'autre par des ressorts 33 expansibles qui s'appuient sur les platines 21 et 22 et les flasques 26 et 27 de manière à assurer le contact des extrémités des tiges 5 et 6, en l'absence d'une action. Les platines sont arrêtées par rapport aux flasques 26 et 27 par des épaulements 34 des chapes 29 suivant un sens de translation.

L'arbre de sortie du moteur 32 comporte une vis 36 qui coopère avec une noix 37 immobile en rotation et solidarisée des axes 30 mobiles pour assurer le déplacement des axes 30 suivant un sens ou le sens opposé lorsque le moteur tourne dans un sens ou le sens opposé.

Le déplacement des axes 30, dont est solidaire le châssis 9, entre les butées 39 et 40 des chapes 29 permet, d'une part, de positionner les extrémités des tiges 5 et 6, qui sont en contact, au niveau de la première chambre 1 ou de la deuxième chambre 2, et, d'autre part, en produisant un effort déterminé sur l'une ou l'autre 39 ou 40 des butées, de déplacer l'une 22 ou 21 des platines respectivement, et d'ouvrir la cavité (ou d'espacer les extrémités des tiges) dans la première 1 ou la deuxième 2 chambres respectivement. Ainsi, au moyen des déplacements des axes 30, on peut transférer un échantillon de fluide de la preière chambre 1, en communication avec l'appareillage d'expérimentation, à la deuxième chambre 2 en communication avec un chromatographe.

Le dispositif d'échantillonnage permet d'avoir une première chambre 1 à très basse température - 100°C et haute pression 100 bar, par exemple, et la deuxième chambre à haute température 150°C et pressurisée à 2 bar et ainsi de prélever un échantillon froid et de le vaporiser efficacement dans la deuxième chambre 2. Cette vaporisation est suffisante pour éviter des condensations liées à l'immersion de l'appareillage dans une enceinte réfrigérée (- 100°C par exemple), et insuffisante pour éviter le craquage des composés du fluide, tels des composés hydrocarbonés.

La figure 2 représente l'appareillage permettant des mesures thermodynamiques à basse température d'un mélange polyphasique de fluides, tel qu'un mélange de gaz hydrocarbonés comportant des gaz condensables.

La phase gazeuse du mélange surnageant la phase liquide du mélange dans la cellule d'essai 50, circule dans une boucle fermée comportant un té avec une vanne d'échantillonnage 51, un té 52 avec un manomètre, une pompe volumétrique 53 maintenant la pression constante des phases gazeuse et liquide, un circulateur axial magnétique 54 à moteur linéaire, un échangeur 55, un té relié d'une part à une canne en verre 56 d'injection dans la phase liquide et d'autre part un pulvérisateur 57 situé dans la phase gazeuse de la cellule d'essai 50. Le mélange de fluide est introduit dans la cellule d'essai par la canalisation 58.

La phase liquide du mélange est prélevée dans la cellule 50 par un orifice inférieur 60, circule à travers la vanne d'échantillonnage 61 décrite précédemment et illustrée à la figure 1, une cellule de transfert 62 comportant un piston mu par un moteur 63, et retourne à la cellule d'essai 50 par un orifice inférieur 64. La phase liquide est brassée dans l'enceinte par un agitateur magnétique 65. La pression dans la cellule d'essai est mesurée par le manomètre 66.

La cellule 50, l'échangeur 55, la canne 56, le pulvérisateur 57, le circuit d'échantillonnage de la phase liquide comportant la vanne d'échantillonnage 61, ainsi que la cellule de transfert 62 sont placés dans une enceinte refroidie. La vanne d'échantillonnage de la phase gazeuse montée sur le té 51 est une vanne de type courant. La cellule de transfert 62 permet de transférer la phase liquide du mélange de la cellule d'essai 50 à travers la vanne d'échantillonnage 61.

Le transfert de la phase liquide s'effectue en conservant l'équilibre thermodynamique au moyen de la compensation de pression assurée par la pompe volumétrique 53. La vanne d'échantillonnage 61 de la phase liquide est située à la même altitude que le fond de lacellule 50 de manière à ne pas perturber les conditions thermodynamiques. En effet, une altitude supérieure de la vanne 61 par rapport au fond de la cellule 50 produirait une dépression (piézométrique) et une vaporisation sélective de constituants de la phase liquide à la pression du point de bulle (équilibre avec des phase liquide et vapeur) et un échantillonnage incorrect de la phase liquide.

D'une manière similaire, pour l'efficacité du transfert de fluide, le fond de la cellule de transfert 62 est situé à l'altitude du fond de la cellule d'essai 50.

La figure 3, représente, vue en coupe et dans un plan perpendiculaire au plan de la figure 1, un agencement avantageux de la ligne du chromatographe qui traverse la deuxième chambre 2 de la vanne d'échantillonnage ou dispositif de transfert représenté à la figure 1.

La ligne 70a, 70b de petit diamètre intérieur, 0,5 mm par exemple, comporte une partie amont 70a par laquelle arrive de l'hélium et une partie aval 70b alimentant une colonne de chromatographie. La partie amont 70a alimente la deuxième chambre 2 en entourant par un enroulement 71 la deuxième chambre 2. La partie 70b est alimentée par la deuxième chambre 2.

En dehors de la deuxième chambre 2 et de l'enroulement 71 disposé autour et le plus près possible de celle-ci, la ligne 70a, 70b du chromatographe comporte des moyens d'échange thermique, tel une gaine 72 en matière plastique du type thermorétractable assurant le refroidissement de la ligne 70a, 70b qui véhicule de l'hélium à 150°C environ et qui est réchauffé sur toute sa longueur par effet Joule au moyen d'un courant alternatif généré par des moyens non représentés.

Contrairement à l'évidence, la matière plastique thermorétractable utilisé d'un type électrique n'isole pas thermiquement la conduite, mais accroît ses échanges thermiques.

La gaine plastique 72 utilisée à une épaisseur de 0,4 mm et un coefficient de transfert thermique λ = 4W/m.K. Pour ce matériau, l'effet d'échange thermique accentué est sensible jusqu'à une épaisseur de 2,5 mm de gaine.

Par cette disposition de la ligne 70a, 70b et de la chambre 2, d'une part on obtient un réchauffement local et notable de la chambre 2 et du gaz au voisinage de la chambre qui permet une vaporisation correcte de l'échantillon de fluide prélevé, d'autre part, on évite dans la partie 70b de la ligne à la fois l'échauffement excessif et la condensation des composés de l'échantillon prélevé.

On pourrait aussi accroître la température du fluide circulant dans la ligne 70a ou diminuer sa température à l'entrée de cette ligne 70a en ne la recouvrant pas de matière plastique thermorétractable.

L'echauffement excessif peut produire le craquage de certains constituants du fluide, tels que des constituants hydrocarbonés.

De manière à réchauffer, par les moyens électriques uniquement, la deuxième chambre du dispositif selon l'invention, on a réalisé la deuxième tige en céramique du type Zircone qui est un isolant électrique et dont le glissement est satisfaisant avec les éléments latéral 8 et central 3 d'étanchéité.

L'extrémité de la première tige 5 qui a un diamètre de 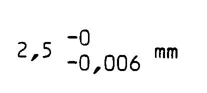
et qui a été réalisé en acier inoxydable, forme une dépression en forme de cône à 90°, ouvert du côté de l'extrémité de la tige, dont la base a un diamètre de

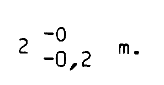

L'espace annulaire compris entre la base du cône et le diamètre de la première tige 5, est une surface plane perpendiculaire à l'axe de la première tige 5.

L'extrémité de la deuxième tige 6 et qui a aussi un diamètre extérieur de 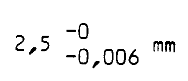
est une surface plane et perpendiculaire à l'axe de la deuxième tige.

L'angle entre la surface annulaire plane de la première tige, ou la surface plane de l'extrémité de la deuxième tige et la paroi extérieure cylindrique de la première ou de la deuxième tige est un angle droit (non cassé).

On aurait très bien pu aussi réaliser la dépression en forme de cône dans la deuxième tige, ou encore réaliser la cavité située aux extrémités des tiges en générant une forme à chacune des extrémités des tiges.

## Revendications

1. Dispositif pour transférer un échantillon fluide d'une première chambre (1) à une deuxième chambre (2) séparée de la première chambre, comportant un ensemble d'une première (5) et d'une deuxième (6) tiges ayant chacune un axe longitudinal, les axes longitudinaux de chacune des tiges étant confondus, la paroi cylindrique de la première tige et la paroi cylindrique de la deuxième tige étant adaptées à coopérer avec un élément central d'étanchéité (3) circonférentiel assurant l'étanchéité entre la première (1) et la deuxième (2) chambres au niveau desdites tiges (5, 6), des moyens de déplacement (9, 30, 32, 36, 37) des tiges suivant leur axe relativement auxdites chambres, lesdits moyens de déplacements étant adaptés à déplacer une cavité entre la première (1) et la deuxième (2) chambres, ledit dispositif comportant des moyens d'ouverture et des moyens de fermeture, les moyens d'ouverture (9, 30, 32, 33, 36, 37, 39) permettant à ladite cavité d'être ouverte dans la première (1) et la deuxième (2) chambre, et les moyens de fermeture permettant la fermeture de la cavité lors du transfert de l'échantillon de la première (1) chambre à la deuxième (2) chambre, caractérisé en ce qu'au moins ladite première tige (5) comporte une extrémité ayant une cavité, la cavité étant alors ouverte, ladite extrémité étant adaptée à coopérer avec une extrémité de la deuxième tige (6) pour fermer ladite cavité, la première (5) et la deuxième (6) tiges comportant chacune une paroi cylindrique extérieure ayant les mêmes dimensions, et en ce que l'une desdites chambres peut être chauffée par rapport à l'autre, ladite chambre (2) est située sur une ligne conductrice (70a, 70b) de l'électricité qui est parcourue par un fluide, en ce que le dispositif comporte des moyens électriques adaptés à faire circuler un courant dans ladite ligne (70a, 70b) pour produire, par effet Joule, un échauffement de ladite ligne et en ce que l'élément central d'étanchéité (3) et une (6) desdites tiges située dans ladite chambre (2) sont des isolants électriques.

2. Dispositif selon la revendication 1, caractérisé en ce que la première (5) et la deuxième (6) tiges traversent de part en part respectivement la première (1) et la deuxième (2) chambres et coopèrent avec un premier (7) ou un deuxième (8) élément latéral d'étanchéité respectivement, assurant, au niveau de la première (5) ou la deuxième (6) des tiges respectivement, le confinement de la première (1) ou la deuxième (2) chambre respectivement.

3. Dispositif selon l'une des revendications 1 ou 2, caractérisé en ce que la deuxième (2) chambre communique avec un dispositif d'analyse.

4. Dispositif selon la revendication 3, caractérisé en ce que la deuxième (2) chambre est située sur une ligne d'échantillonnage dans laquelle circule un fluide vecteur.

5. Dispositif selon l'une des revendications 1 à 4 dans lequel l'une (2) au moins desdites chambres doit être refroidie ou réchauffée et maintenue à une température déterminée (Fig. 3), caractérisé en ce que ladite chambre (2) est située sur une ligne (70a, 70b) dans laquelle circule un fluide, en ce que ladite ligne (70a, 70b) comporte un enroulement (71) autour de ladite chambre (2), de manière à ce que la circulation de fluide refroidisse ou réchauffe respectivement ladite chambre.

6. Dispositif selon la revendication 1, caractérisé en ce que ladite ligne (70a, 70b) comporte au moins en dehors de l'une (2) desdites chambres des moyens d'échange thermique (72) extérieurs à ladite ligne (70a, 70b) et adaptés au transfert d'énergie thermique entre ladite ligne et un milieu extérieur à ladite ligne.

7. Dispositif selon la revendication 6, caractérisé en ce que ladite ligne comporte un enroulement (71) autour de ladite chambre (2) à réchauffer ou à refroidir, et en ce que les moyens d'échange thermique (72) sont disposés sur ladite ligne en dehors dudit enroulement (71).

8. Dispositif selon l'une des revendications 1 ou 2, caractérisé en ce que l'un au moins desdits éléments d'étanchéité (3, 7, 8) comporte un matériau polymérique du type polyimide.

9. Dispositif selon la revendication 1, caractérisé en ce que la première (5) et la deuxième (6) tiges traversent de part en part respectivement la première (1) et la deuxième (2) chambre, et coopèrent avec un premier (7) et un deuxième (8) éléments latéraux d'étanchéité respectivement assurant, au niveau de la première (5) et de la deuxième (6) tiges respectivement, le confinement de la première (1) et de la deuxième (2) chambres respectivement, en ce que le dispositif comporte un axe (30) solidaire desdites première (1) et deuxième (2) chambres, de l'élément central d'étanchéité (3), des premier (7) et deuxième (8) éléments latéraux d'étanchéité, une première (39) et une deuxième (40) butées solidaires de la première (5) et la deuxième (6) tiges, ledit axe (30) se déplaçant relativement auxdites tiges (5, 6) entre lesdites butées (39, 40), de manière à placer les extrémités de la première (5) et la deuxième (6) tiges d'une part dans la première chambre (1) lorsque l'axe est en contact avec la première butée (39) et d'autre part dans la deuxième chambre (2) lorsque l'axe est en contact avec la deuxième butée (40), et en ce que les moyens d'ouverture (9, 30, 32, 36, 37) de ladite cavité comportent des éléments élastiques (33) permettant d'une part le déplacement des butées (39, 40) sous l'action d'un effort déterminé produit par ledit axe (30), de manière à produire l'ouverture de ladite cavité et permettant d'autre part le replacement des butées (39, 40) lorsque ledit effort déterminé est supprimé de manière à produire une fermeture de ladite cavité, les extrémités des première (5) et deuxième (6) tiges étant alors en contact.

10. Dispositif sleon l'une des revendications 1 à 9, caractérisé en ce que la première (5) ou la deuxième (6) tiges est en céramique.

11. Procédé pour transférer un échantillon de fluide d'une première chambre (1) à une deuxième chambre (2) séparée de la première chambre (1), un élément central d'étanchéité (3) assurant l'étanchéité entre les deux chambres, caractérisé en ce que l'on effectue les étapes successives suivantes :
- on ouvre une cavité définie par les extrémités de deux tiges (5, 6) coaxiales cylindriques, ayant des parois cylindriques de même dimensions,
- on ferme ladite cavité dans ladite première chambre (1), on transfère ladite cavité de ladite première chambre (1) à ladite deuxième chambre (2) par une translation axiale desdites tiges (5, 6) relativement auxdites chambres,
- on ouvre ladite cavité dans ladite deuxième chambre (2), et
- on chauffe l'une au moins desdites chambres par effet Joule en plaçant ladite chambre sur une ligne conductrice (70a, 70b) de l'électricité qui est parcourue par un fluide, des moyens électriques étant adaptés à faire circuler un courant dans ladite ligne (70a, 70b) pour produire un échauffement de cette ligne, l'élément central d'étanchéité (3) et l'une des tiges située dans ladite chambre étant des isolants électriques.

12. Procédé selon la revendication 11, selon lequel on déplace la première (1) et la deuxième (2) chambres entre deux positions définies par le contact d'un chassis (9) solidaire des chambres avec une première (39) et une deuxième (40) butées respectivement solidaires de la deuxième tige (6) et de la première tige (5), lesdites tiges étant alors en contact l'une de l'autre, caractérisé en ce que, pour ouvrir ladite cavité sous l'action d'un effort déterminé et contre l'action de moyens de rappel (33), on produit le déplacement de l'une ou de l'autre des butées (39, 40), ledit châssis (9) étant en contact avec l'une ou l'autre des butées (39, 40) de manière à séparer les extrémités des tiges (5, 6) et ainsi ouvrir ladite cavité.

13. Application du dispositif selon l'une des revendications 1 à 10 et du procédé selon les revendications 11 ou 12 à la prise d'échantillon dans une première chambre (1) ayant une température inférieure à moins 50°C et de préférence inférieure à moins 100°C.

14. Application du dispositif selon l'une des revendications 1 à 10 ou du procédé selon l'une des revendications 11 ou 12, à la mesure par chromatographie gazeuse.

## Claims

1. A device for transferring a fluid sample from a first chamber (1) to a second chamber (2) separated from the first chamber, comprising an assembly of a (5) first and a second (6) rod each having a longitudinal axis, the longitudinal axis of each of these rods merging, the cylindrical wall of the first rod and the cylindrical wall of the second rod being designed to cooperate with a circumferential central sealing element (3) providing a seal between the first (1) and the second (2) chamber at the level of the rods (5, 6), means for displacing (9, 30, 32, 36, 37) the rods along their axes relative to the chambers, these displacement means being designed to move a cavity between the first (1) and the second (2) chamber, the device having opening and closing means, the opening means (9, 30, 32, 33, 36, 37, 39) enabling the cavity to be opened inside the first (1) and the second (2) chambers, and the closing means enabling the cavity to be closed when the sample is transferred from the first (1) chamber to the second (2) chamber, characterised in that at least the first rod (5) has one end with a cavity, the cavity being thus open, this end being designed to co-operate with one end of the second rod (6) to close this cavity, the first (5) and second (6) rods each having an outer cylindrical wall of the same dimensions, and in that one of these chambers may be heated relative to the other, this chamber (2) being located on an electrical conducting line (70a, 70b) through which a fluid circulates, and in that the device has electrical means designed to circulate current in the line (70a, 70b) to heat this line by the Joule effect, and in that the central sealing element (3) and one (6) of the rods located in this chamber (2) is an electrical insulator.

2. A device in accordance with claim 1, characterised in that the first (5) and the second (6) rods cross from one side of the respective first (1) and the second (2) chambers to the other and co-operate with a first (7) and a second (8) lateral sealing element respectively, confining at the level of the first (5) and second (6) rods respectively the first (1) or the second (2) chamber respectively.

3. A device in accordance with one of claims 1 or 2, characterised in that the second (2) chamber is connected to analysis apparatus.

4. A device in accordance with claim 3, characterised in that the second (2) chamber is located on a sampling line in which a vector fluid is circulating.

5. A device in accordance with one of claims 1 to 4, in which one (2) at least of the chambers must be cooled or heated and maintained at a given temperature (Fig. 3), characterised in that this chamber (2) is located on a line (70a, 70b) in which a fluid is circulating, and in that the line (70a, 70b) has a section winding (71) around the chamber (2) so that the circulating fluid can respectively cool or heat the chamber.

6. A device in accordance with claim 1, characterised in that the line (70a, 70b) has outside one (2) of the chambers heat exchange means (72) outside the line (70a, 70b) designed to transfer thermal energy between the line and a medium outside the line.

7. A device in accordance with claim 6, characterised in that the line has a section winding (71) around the chamber (2) to heat or cool it, and in that the heat exchange means (72) are arranged on the line outside the winding section (71).

8. A device in accordance with one of claims 1 or 2, characterised in that at least one of the sealing elements (3, 7, 8) comprises a polymer material of the polyimide type.

9. A device in accordance with claim 1, characterised in that the first (5) and the second (6) rods cross from one side of the respective first (1) and the second (2) chambers to the other and co-operate with a first (7) and a second (8) lateral sealing element respectively, confining at the level of the first (5) and second (6) rods respectively the first (1) and the second (2) chambers respectively, and in that the device comprises an axle (30) integral with the first (1) and second (2) chambers, the central sealing element (3), the first (7) and second (8) lateral sealing elements, a first (39) and a second (40) stop joined to the first (5) and the second (6) rods, this axle (30) being movable relative to the rods between these stops (39, 40) so as to position the ends of the first (5) and the second (6) rods in the first chamber (1) when the axle is in contact with the first stop (39) on the one hand and in the second chamber (2) when the axle is in contact with the second stop (40) on the other, and in that the opening means (9, 30, 32, 36, 37) of the cavity comprise elastic elements (33) allowing displacement of the stops (39, 40) under a given force produced by the axle (30) to open the cavity on the one hand and allowing the stops (39, 40) to be repositioned when the given force is suppressed to close the cavity when the ends of the first (5) and second (6) rods are in contact on the other.

10. A device in accordance with one of claims 1 to 9, characterised in that the first (5) or the second (6) rod is made from ceramic.

11. A method for transferring a fluid sample from a first chamber (1) to a second chamber (2) separated from the first chamber (1) wherein a central sealing element (3) provides a seal between the two chambers, characterised in that the following steps are carried out in succession:
- a cavity defined by the ends of two coaxial cylindrical rods (5, 7) having cylindrical walls of the same dimensions, is opened,
- this cavity is closed in the first chamber (1), the cavity is transferred from the first chamber (1) to the second chamber (2) by axial translation of the rods (5, 6) relative to the chambers,
- the cavity is opened in the second chamber (2), and
- at least one (2) of the chambers is heated by the Joule effect by placing the chamber on an electricity conducting line (70a, 70b) through which a fluid passes, electric means being included to circulate current through the line (70a, 70b) to heat this line, the central sealing element (3) and one of the rods located in the chamber being electrically insulated.

12. A method in accordance with claim 11, whereby the first (1) and second (2) chambers are displaced between two positions defined by contact of a chassis (9) joined to the chambers with a first (39) and a second (40) stop joined respectively to the second (6) and the first (5) rods, the rods then being in contact with each other, characterised in that to open this cavity under the effect of a given force and against the action of return means (33), one or other of the stops (39, 40) is displaced, the chassis (9) being in contact with one or other of the stops (39, 40) so as to separate the ends of the rods (5, 6), thereby opening the cavity.

13. Application of the device in accordance with one of claims 1 to 10 and the method in accordance with claims 11 or 12 to the process of taking a sample in a first chamber (1) with a temperature of less than minus 50°C and preferably lower than minus 100°C.

14. Application of the device in accordance with one of claims 1 to 10 or of the method in accordance with claims 11 or 12 to the process of measurement by gas chromatography.

## Patentansprüche

1. Vorrichtung zur Überführung einer Fluidprobe aus einer ersten Kammer (1) in eine zweite (2) von der ersten Kammer getrennte Kammer, umfassend eine Gruppierung einer ersten (5) und einer zweiten (6) Stange, die je über eine Längsachse verfügen, wobei die Längsachsen jeder der Stangen zusammenfallen, die zylindrische Wand der ersten Stange und die zylindrische Wand der zweiten Stange so ausgelegt sind, daß sie mit einem mittigen Umfangsdichtungselement (3) zusammenwirken, das für die Abdichtung zwischen der ersten (1) und der zweiten (2) Kammer in Höhe dieser Stangen (5, 6) sorgen, mit Mitteln zur Verschiebung (9, 30, 32, 36, 37) der Stangen längs ihrer Achse relativ zu diesen Kammern, wobei diese Verschiebungsmittel so ausgebildet sind, daß sie einen Hohlraum zwischen der ersten (1) und der zweiten (2) Kammer verschieben, die Vorrichtung Mittel zum Öffnen und Mittel zum Schließen umfaßt, wobei die Öffnungsmittel (9, 30, 32, 33, 36, 37, 39) es diesem Hohlraum ermöglichen, offen in die erste (1) und zweite (2) Kammer zu sein und die Schließmittel das Schließen des Hohlraums bei der Überführung der Probe aus der ersten (1) in die zweite Kammer (2) ermöglichen,
dadurch gekennzeichnet, daß wenigstens diese erste Stange (5) ein Ende mit einem Hohlraum umfaßt, wobei der Hohlraum dann offen ist, dieses Ende so ausgelegt ist, daß es mit einem Ende der zweiten Stange (6) zum schließen dieses Hohlraums zusammenwirkt, die erste (5) und die zweite (6) Stange je über eine zylindrische Außenwand verfügen, die die gleichen Abmessungen haben und daß eine dieser Kammern gegenüber der anderen erwärmt werden kann, wobei diese Kammer (2) auf einer die Elektrizität leitenden Leitung (70a, 70b) angeordnet ist, welche von einem Fluid durchflossen ist, daß die Vorrichtung elektrische Mittel derartiger Auslegung umfaßt, daß ein Strom in dieser Leitung (70a, 70b) zirkuliert, um durch Joule-Effekt eine Erwärmung dieser Leitung hervorzurufen und daß das mittige Dichtungselement (3) und eine (6) dieser Stangen, die in dieser Kammer (2) angeordnet ist, elektrisch isolierend sind.

2. Vorrichtung nach Anspruch 1, dadurch gekennzeichnet, daß die erste (5) und die zweite (6) Stange zu beiden Seiten jeweils die ersten (1) und zweiten (2) Kammern durchsetzen und jeweils mit einem ersten (7) und einem zweiten (8) seitlichen Dichtungselement zusammenwirken, das in Höhe der ersten (5) oder zweiten (6) Stange jeweils für das Verschließen der ersten (1) bzw. der zweiten (2) Kammer sorgt.

3. Vorrichtung nach einem der Ansprüche 1 oder 2, dadurch gekennzeichnet, daß die zweite Kammer (2) mit einem Analysegerät in Verbindung steht.

4. Vorrichtung nach Ansprüch 3, dadurch gekennzeichnet, daß die zweite Kammer (2) auf einer Probenahmeleitung angeordnet ist, in der ein Trägerfluid zirkuliert.

5. Vorrichtung nach einem der Ansprüche 1 bis 4, bei der wenigstens eine (2) dieser Kammern gekühlt oder erwärmt werden und auf einer bestimmten Temperatur (Fig. 3) gehalten werden soll, dadurch gekennzeichnet, daß diese Kammer (2) auf einer Leitung (70a, 70b) angeordnet ist, in der ein Fluid zirkuliert, daß diese Leitung (70a, 70b) eine Wicklung um diese Kammer (2) derart aufweist, daß die Fluidzirkulation jeweils diese Kammer kühlt oder erwärmt.

6. Vorrichtung nach Anspruch 1, dadurch gekennzeichnet, daß diese Leitung (70a, 70b) wenigstens außerhalb einer (2) dieser Kammern Wärmeaustauschermittel (72) außerhalb dieser Leitung (70a, 70b) umfaßt, die für die Wärmeübertragung zwischen dieser Leitung und einem Medium außerhalb dieser Leitung ausgelegt sind.

7. Vorrichtung nach Anspruch 6, dadurch gekennzeichnet, daß diese Leitung eine Wicklung (71) um diese zu erwärmende oder zu kühlende Kammer (2) herum umfaßt, und daß diese wärmeaustauschenden Mittel (72) auf dieser Leitung außerhalb dieser Wicklung (71) angeordnet sind.

8. Vorrichtung nach einem der Ansprüche 1 oder 2, dadurch gekennzeichnet, daß wenigstens eines dieser Dichtungselemente (3, 7, 8) ein Polymermaterial vom Typ Polyimid umfaßt.

9. Vorrichtung nach Anspruch 1, dadurch gekennzeichnet, daß die erste (5) und zweite (6) Stange zu beiden Seiten jeweils die erste (1) und zweite (2) Kammer durchsetzen und mit einem ersten (7) und zweiten (8) seitlichen Dichtungselement jeweils zusammenwirken, das in Höhe der ersten (5) und zweiten (6) Stange jeweils für das Verschließen der ersten (1) oder zweiten (2) Kammer sorgen, daß die Vorrichtung eine Achse (30) umfaßt, die fest mit der ersten (1) und zweiten (2) Kammer des zentralen Dichtungselements (3) ist, erste (7) und zweite (8) seitliche Dichtungselemente, sowie ein erster (39) und ein zweiter (40) fest mit der ersten und zweiten Stange (5; 6) verbundener Anschlag, wobei diese Achse (30) sich relativ zu diesen Stangen (5,6) zwischen diesen Anschlägen (39, 40) derart verschiebt, daß die Enden der ersten (5) und zweiten (6) Stangen einerseits in der ersten Kammer (1) angeordnet sind, wenn die Achse sich in Kontakt mit dem ersten Anschlag (39) befindet und andererseits in der zweiten (2) angeordnet sind, wenn die Achse sich in Kontakt mit dem zweiten Anschlag (40) befindet und daß die Öffnungsmittel (9, 30, 32, 36, 37) dieses Hohlraums elastische Elemente (33) umfassen, die einerseits die Verschiebung der Anschläge (39, 40) unter der Wirkung einer bestimmten Kraft ermöglichen, die durch diese Achse (30) erzeugt wurde, derart, daß das Öffnen dieses Hohlraumervorgerufen wird und anderer seits die Rückstellung der Anschläge (39, 40) ermöglichen, wenn diese bestimmte Kraft wegfällt, derart, daß ein Schließen dieses Hohlraums hervorgerufen wird, wobei die Enden der ersten (5) und zweiten (6) Stangen dann in Kontakt stehen.

10. Vorrichtung nach einem der Ansprüche 1 bis 9, dadurch gekennzeichnet, daß die ersten (5) und zweiten (6) Stangen aus Keramik bestehen.

11. Verfahren zum Überführen einer Fluidprobe aus einer ersten (1) Kammer in eine zweite von der ersten Kammer (1) getrennte Kammer (2), wobei ein mittiges Dichtungselement (3) für die Abdichtung zwischen diesen beiden Kammern sorgt, gekennzeichnet durch nachstehende aufeinanderfolgende Stufen:
- man öffnet einen durch die Enden der beiden coachsialen zylindrischen Stangen (5, 6) definierten Hohlraum, wobei diese zylindrische Wandungen gleicher Abmessung haben,
- man schließt diesen Hohlraum in dieser Kammer (1), man überführt diesen Hohlraum aus dieser ersten Kammer (1) in diese zweite Kammer (2) durch eine achsiale Translation dieser Stangen (5, 6) relativ zu diesen Kammer,
- man öffnet diesen Hohlraum in diese zweite Kammer (2) und man erwärmt wenigstens eine dieser Kammern durch Joule-Effekt, indem man diese Kammer auf einer Elektrizität führenden Leitung (70a, 70b) anordnet, die von einem Fluid durchströmt ist, wobei elektrische Mittel so ausgelegt sind, daß sie einen Strom in dieser Leitung (70a, 70b) zirkulieren lassen, um eine Erwärmung dieser Leitung hervorzurufen, wobei das mittige Dichtungselement (3) und eine der in dieser Kammer angeordneten Stangen elektrische Isoliermittel sind.

12. Verfahren nach Anspruch 11, wonach man die erste (1) und zweite (2) Kammer zwischen zwei Positionen verschiebt, die definiert sind durch den Kontakt eines bezüglich der Kammern festen Chassis (9) mit einem ersten Anschlag (39) bzw. mit einem zweiten Anschlag (40), die jeweils fest bezüglich der zweiten Stange (6) und der ersten Stange (5) sind, wobei diese Stangen dann in Kontakt miteinander stehen, dadurch gekennzeichnet, daß zum Öffnen dieses Hohlraums unter der Wirkung einer bestimmten Kraft und gegen die Wirkung von Rückstellmitteln (33) man die Verschiebung des einen oder anderen der Anschläge (39, 40) hervorruft, wobei das Chassis (9) in Kontakt mit dem einen oder anderen der Anschläge (39, 40) steht, derart, daß die Enden der Stangen (5, 6) voneinander getrennt sind und so dieser Hohlraum geöffnet wird.

13. Anwendung der Vorrichtung nach einem der Ansprüche 1 bis 10 und des Verfahrens nach einem der Ansprüche 11 oder 12 auf die Probennahme in einer ersten Kammer 1, die eine Temperatur die unterhalb wenigstens 50°C und vorzugsweise unterhalb wenigstens 100°C hat.

14. Anwendung der Vorrichtung nach einem der Ansprüche 1 bis 10 oder des Verfahrens nach einem der Ansprüche 11 oder 12 auf die Messung durch Gaschromatigraphie.
